# EUROPEAN PATENT SPECIFICATION

(11) **EP 3 136 698 B1**
(45) Date of publication and mention of the grant of the patent: **16.05.2018**
(21) Application number: 16158682.1
(22) Date of filing: 04.03.2016
(51) Int. Cl.: H04M 1/725, H04L 12/26, H04W 24/08, H04W 8/00, H04W 84/12

(54) **CONNECTION STATUS PROMPTING METHOD AND DEVICE**
VERBINDUNGSZUSTANDSANZEIGEVERFAHREN UND VORRICHTUNG
PROCÉDÉ ET DISPOSITIF D'ANNONCE D'ÉTAT DE CONNEXION

(30) Priority: 31.08.2015 CN 201510546602
(43) Date of publication of application: 01.03.2017
(73) Proprietor: Xiaomi Inc., Beijing 100085 (CN)
(72) Inventor: WANG, Shuo, 100085 Haidian District (CN); WANG, Bin, 100085 Haidian District (CN); WANG, Bo, 100085 Haidian District (CN)
(74) Representative: Sadler, Peter Frederick

(56) References cited:
- US-A1- 2005 143 137
- US-A1- 2006 174 160
- US-A1- 2014 082 667
- US-A1- 2014 244 839
- "Fritz Box! Fon WLAN 7390 - Installation, Configuration, and Operation", 20101001 , 31 October 2010 (2010-10-31), pages 1-197, XP002625754, Retrieved from the Internet: URL:http://www.avm.de/en/service/manuals/F RITZBox/Manual_FRITZBox_Fon_WLAN_7390.pdf [retrieved on 2011-03-01]

## Description

### TECHNICAL FIELD

The present disclosure generally relates to the technical field of networks, and more particularly, to a connection status prompting method and device.

### BACKGROUND

Wireless-Fidelity (WiFi) technology relates to wireless connection technology. With the development of science and technology, wireless networks employing WiFi technology have become widely spread in all aspects of people's daily life, and, as such, WiFi technology has become more and more important for people's daily life.

There is a connection status prompting method in a related technology. In the method, a terminal establishes a WiFi connection with a wireless router by means of WiFi technology at first, the wireless router may establish a connection with the public Internet, and the terminal may acquire the WiFi signal strength of a WiFi network provided by the wireless router and display the WiFi signal strength to a user as a connection status.

The document US2005143137A1 relates to a mobile terminal with first and second display units as well as a control unit which controls display contents of the first and the second display units respectively. The control unit displays status information on the second display unit.

The document US2014244839A1 is directed to monitoring internet connection status in wireless communication system. The mobile station 100 determines the connection status with the DNS server 104 through AP 102 by sending a DNS ping to the DNS server 104 and receiving a response from the DNS server 104.

### SUMMARY

Accordingly, the present invention provides a connection status prompting method and device, in accordance with claims which follow.

According to a first aspect of the present disclosure, a connection status prompting method is provided, which includes:
periodically accessing a specified domain name, and making a request to acquire a network resource to a network server corresponding to the specified domain name;
determining a connection status between a WiFi network and the public Internet according to an acquisition condition of the network resource, the connection status including: a connected status and a disconnected status; and
providing the connection status for a terminal, the terminal being configured to present the connection status to a user, wherein the step of providing the connection status for the terminal includes: broadcasting the connection status to enable the terminal accessing the WiFi network to acquire the connection status

Thus, the connection status, determined according to the acquisition condition of the network resource, of the WiFi network and the public Internet is presented to the user, so that the problems of undiversified prompted information and poorer prompting effect when the terminal employs WiFi signal strength as the connection status in the related technology are solved; and the effect that the terminal may determine whether the WiFi network is normally connected with the public Internet or not according to the connection status is achieved, and a better prompting effect is achieved.

Optionally, the step of determining the connection status between the WiFi network and the public Internet according to the acquisition condition of the network resource comprises:
detecting whether the network resource fed back by the network server corresponding to the specified domain name is received or not;
in the case that the network resource is received, determining that the connection status between the WiFi network and the public Internet is the connected status; and
in the case that the network resource is not received, determining that the connection status between the WiFi network and the public Internet is the disconnected status.

Optionally, the step of determining the connection status between the WiFi network and the public Internet according to the acquisition condition of the network resource comprises:
in the case that the network resource is received, acquiring a data transmission rate at the time of receiving the network resource; and
determining the connection status according to the data transmission rate.

According to a second aspect of the present disclosure, a connection status prompting device is provided, which includes:
a resource requesting module, configured to periodically access a specified domain name, and make a request to acquire a network resource to a network server corresponding to the specified domain name;
a connection determination module, configured to determine a connection status between a WiFi network and the public Internet according to an acquisition condition of the network resource, the connection status including: a connected status and a disconnected status; and
a status provision module, configured to provide the connection status for a terminal, the terminal being configured to present the connection status to a user, wherein the status provision module is configured to broadcast the connection status to enable the terminal accessing the WiFi network to acquire the connection status.

Thus, the connection status, determined according to the acquisition condition of the network resource, of the WiFi network and the public Internet is presented to the user, so that the problems of undiversified prompted information and poorer prompting effect when the terminal employs WiFi signal strength as the connection status in the related technology are solved; and the effect that the terminal may determine whether the WiFi network is normally connected with the public Internet or not according to the connection status is achieved, and a better prompting effect is achieved.

Optionally, the connection determination module may be configured to:
detect whether the network resource fed back by the network server corresponding to the specified domain name is received or not;
in the case that the network resource is received, determine that the connection status between the WiFi network and the public Internet is the connected status; and
in the case that the network resource is not received, determine that the connection status between the WiFi network and the public Internet is the disconnected status.

Optionally, the connection determination module may be configured to:
in the case that the network resource is received, acquire a data transmission rate at the time of receiving the network resource; and
determine the connection status according to the data transmission rate.

According to a third aspect of the present disclosure, a connection status prompting device is provided, which includes:
a processor; and
a memory configured to store instructions executable by the processor,
wherein the processor may be configured to carry out any of the methods of the first aspect described above.

Thus, the connection status, determined according to the acquisition condition of the network resource, of the WiFi network and the public Internet is presented to the user, so that the problems of undiversified prompted information and poorer prompting effect when the terminal employs WiFi signal strength as the connection status in the related technology are solved; and the effect that the terminal may determine whether the WiFi network is normally connected with the public Internet or not according to the connection status is achieved, and a better prompting effect is achieved.

In one particular embodiment, the steps of the connection status prompting method are determined by computer program instructions.

Consequently, according to a fourth aspect, the invention is also directed to a computer program for executing the steps of the connection status prompting method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram illustrating an implementation environment related to a connection status prompting method provided by each embodiment of the present disclosure;
Fig. 2 is a flow chart showing a connection status prompting method, according to an exemplary embodiment;
Fig. 3-1 is a flow chart showing another connection status prompting method, according to an exemplary embodiment;
Fig. 3-2 is a flow chart showing determination of a connection status in the embodiment shown in Fig. 3-1;
Fig. 3-3 is another flow chart showing determination of a connection status in the embodiment shown in Fig. 3-1;

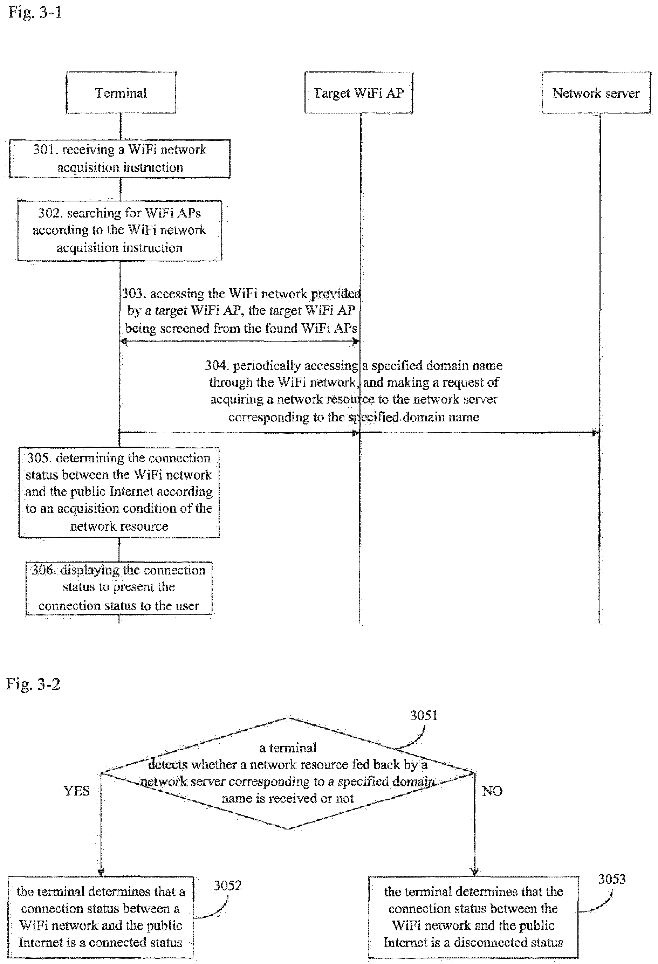

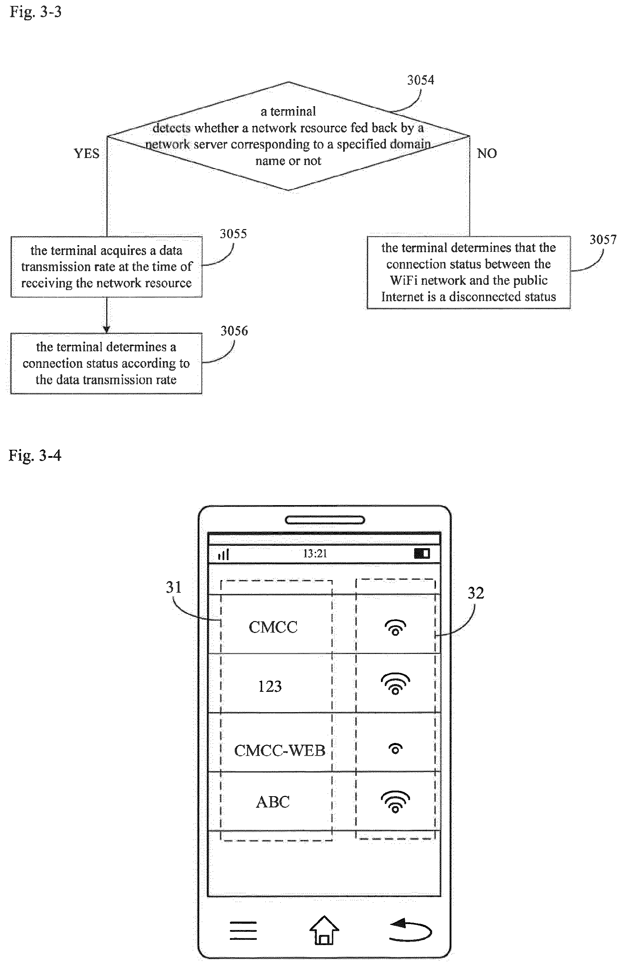

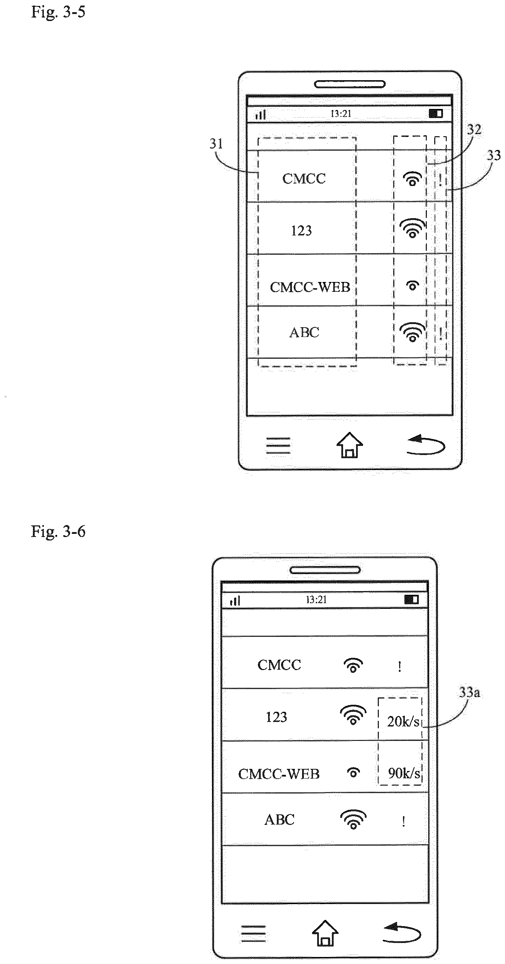

Fig. 3-4 is a schematic diagram illustrating connection status prompting in the related technology;
Fig. 3-5 and Fig. 3-6 are schematic diagrams illustrating display of a connection status to a user in the embodiment shown in Fig. 3-1;

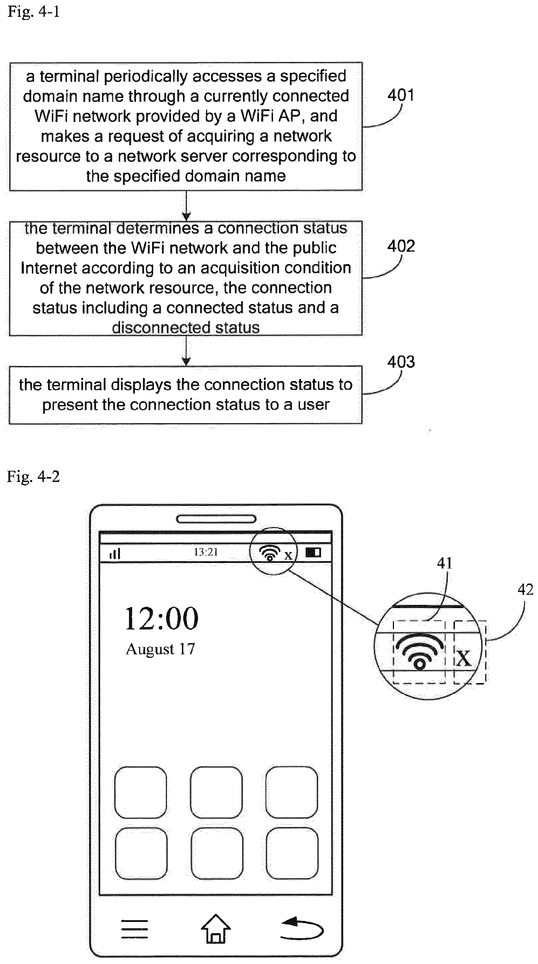

Fig. 4-1 is a flow chart showing another connection status prompting method, according to an exemplary embodiment;
Fig. 4-2 is a schematic diagram illustrating display of a connection status to a user in the embodiment shown in Fig. 4-1;

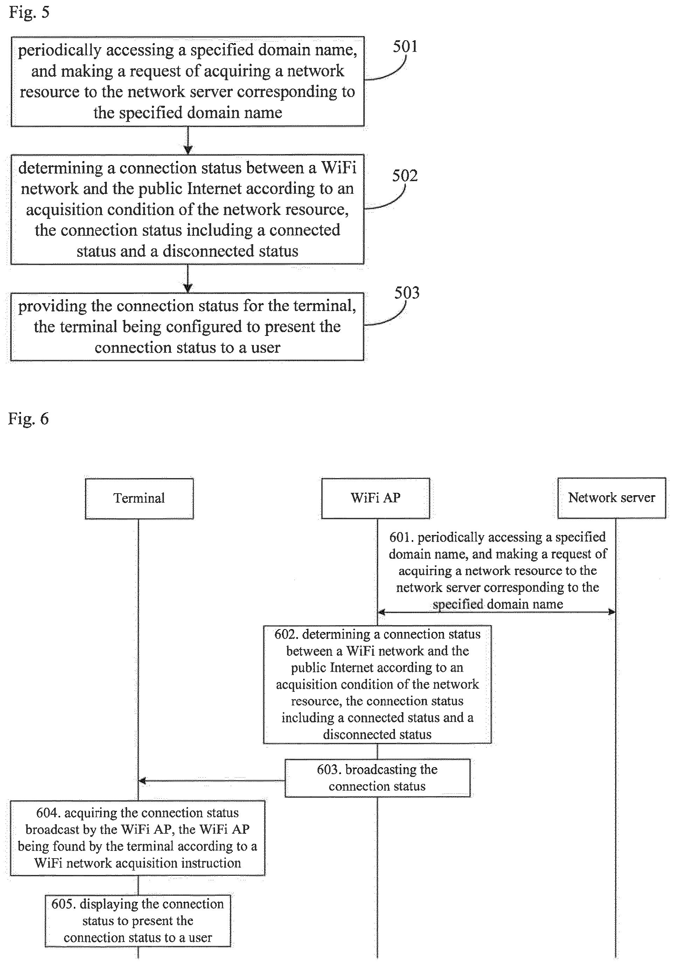

Fig. 5 is a flow chart showing another connection status prompting method, according to an exemplary embodiment;
Fig. 6 is a flow chart showing another connection status prompting method, according to an exemplary embodiment;

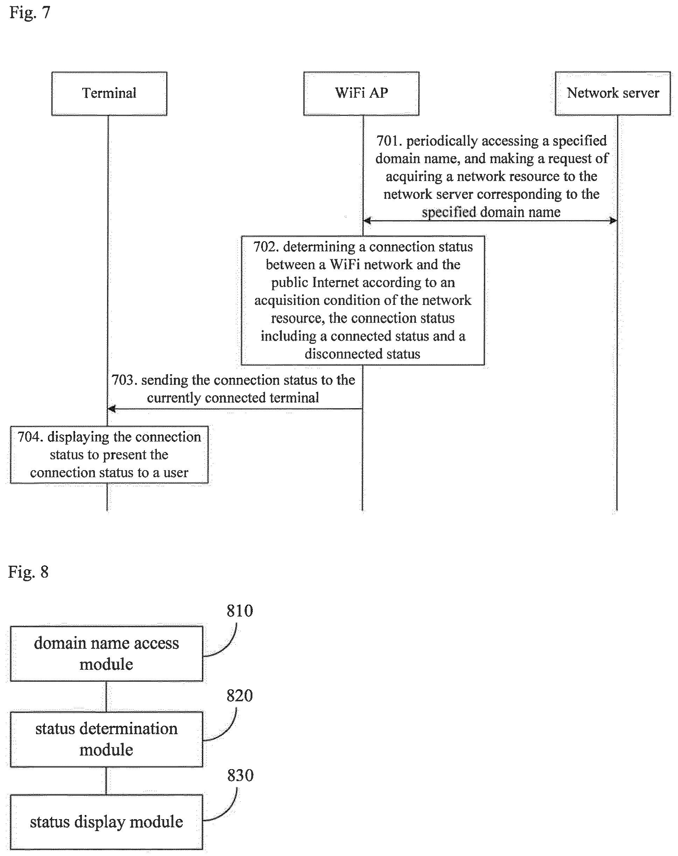

Fig. 7 is a flow chart showing another connection status prompting method, according to an exemplary embodiment;
Fig. 8 is a block diagram illustrating a connection status prompting device, according to an exemplary embodiment;

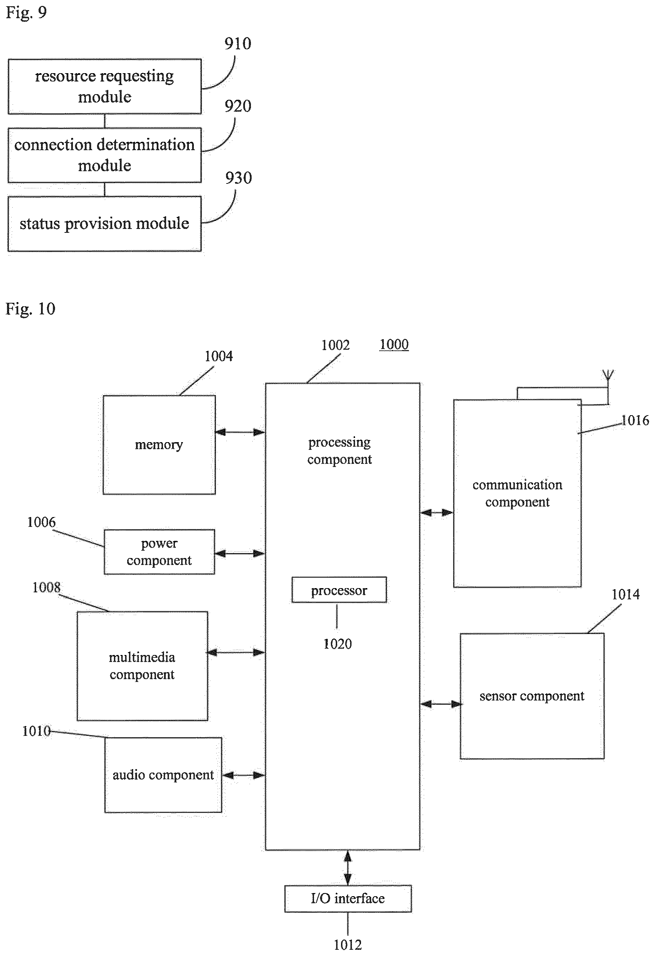

Fig. 9 is a block diagram illustrating a connection status prompting device, according to an exemplary embodiment;
Fig. 10 is a block diagram illustrating a connection status prompting device, according to an exemplary embodiment; and

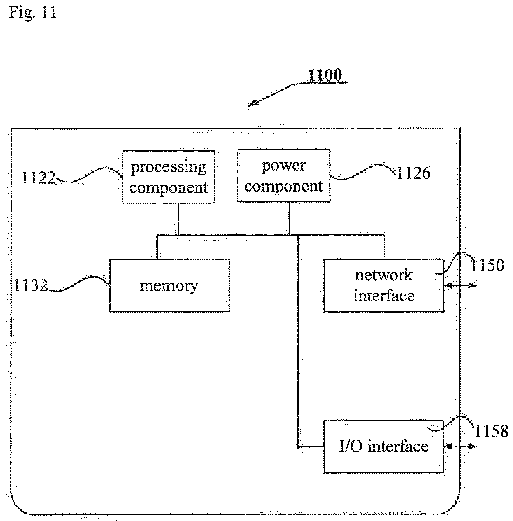

Fig. 11 is a block diagram illustrating a connection status prompting device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

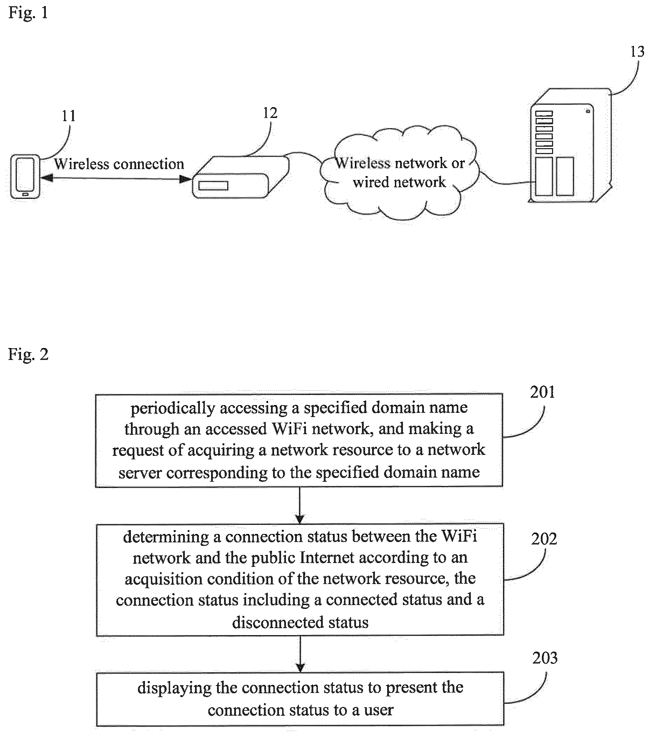

Fig. 1 is a schematic diagram illustrating an implementation environment related to a connection status prompting method provided by each embodiment of the present disclosure, and the implementation environment may include: a terminal 11, a WiFi AP 12 and a network server 13.

The terminal 11 may be a mobile phone, a tablet Personal Computer (PC), a laptop computer, a desktop computer and the like.

The WiFi AP 12 may be equipment with a network access function, such as a router. The WiFi AP 12 may establish a wireless connection with the terminal 11, for example, a WiFi connection or a BlueTooth (BT) connection, and in addition, the WiFi AP 12 may further establish a connection with the public Internet.

The network server 13 may be a server, or a server cluster consisting of a plurality of servers, or a cloud computing service center. The network server 13 has a public Internet address, and the WiFi AP 12 may access the network server 13 through the connection established with the public Internet.

There are no limits to the numbers of the terminal 11 and the WiFi AP 12 in the implementation environment.

Fig. 2 is a flow chart showing a connection status prompting method, according to an exemplary embodiment, and description is given by taking an application of the connection status prompting method to the terminal 11 in the implementation environment shown in Fig. 1 as an example in the embodiment. The connection status prompting method may include the following steps.

In Step 201, a specified domain name is periodically accessed through an accessed WiFi network, and a request to acquire a network resource to a network server corresponding to the specified domain name is made.

In Step 202, a connection status between the WiFi network and the public Internet is determined according to an acquisition condition of the network resource, wherein the connection status includes a connected status and a disconnected status.

In Step 203, the connection status is displayed to present the connection status to a user.

From the above, according to the connection status prompting method provided by the embodiment of the present disclosure, the connection status, determined according to the acquisition condition of the network resource, of the WiFi network and the public Internet is presented to the user, so that the problems of undiversified prompted information and poorer prompting effect when the terminal employs WiFi signal strength as the connection status in the related technology are solved; and the effect that the terminal may determine whether the WiFi network is normally connected with the public Internet or not according to the connection status is achieved, and a better prompting effect is achieved.

Fig. 3-1 is a flow chart showing another connection status prompting method, according to an exemplary embodiment, and description is given by taking an application of the connection status prompting method to the implementation environment shown in Fig. 1 as an example in the embodiment. The connection status prompting method may include the following steps.

In Step 301, the terminal receives a WiFi network acquisition instruction.

When the terminal does not access a WiFi network provided by the WiFi AP, the terminal receives the WiFi network acquisition instruction, wherein the WiFi network acquisition instruction may be sent by a user. Exemplarily, the user may operate the terminal and send the WiFi network acquisition instruction to the terminal when it is necessary to connect the WiFi network. Alternatively, the terminal may also automatically acquire the WiFi network acquisition instruction when being started.

In Step 302, the terminal searches for WiFi APs according to the WiFi network acquisition instruction.

After the terminal acquires the WiFi network acquisition instruction, the terminal may search for the WiFi APs according to the WiFi network acquisition instruction, wherein the WiFi APs may continuously broadcast own device information. For example, device information of a wireless router may include a Service Set Identifier (SSID) and a Media Access Control (MAC) address. The terminal may search for the device information broadcast by the WiFi APs nearby.

In Step 303, the terminal accesses the WiFi network provided by a target WiFi AP, the target WiFi AP being screened from the found WiFi APs.

After the terminal finds the WiFi APs, the terminal may screen one WiFi AP from at least one found WiFi AP as the target WiFi AP and establish a WiFi connection with the target WiFi AP, a process of establishing the WiFi connection being a process of accessing the WiFi network provided by the WiFi AP.

Optionally, the screening process may include:
(1) removing encrypted WiFi APs whose passwords are not stored in the terminal from multiple found WiFi APs;
(2) removing WiFi APs of which signal strength is lower than a signal threshold value from multiple remaining WiFi APs; and
(3) determining any WiFi AP in the remaining WiFi APs as the target WiFi AP, and accessing the WiFi network provided by the target WiFi AP.

In Step 304, the terminal periodically accesses a specified domain name through the WiFi network, and makes a request to acquire a network resource to the network server corresponding to the specified domain name.

After the terminal accesses the WiFi network provided by the target WiFi AP, the terminal may periodically access the specified domain name through the WiFi network and make the request to acquire the network resource to the network server corresponding to the specified domain name, wherein the specified domain name may be a public network domain name, so that the network server may receive the request when there is a connection established between the target WiFi AP and the public Internet.

It is noted that the periodic access of the terminal to the specified domain name may ensure timeliness of an acquired connection status. Such a period may be preset. Exemplarily, the period may be set to be 10 minutes.

In Step 305, the terminal determines the connection status between the WiFi network and the public Internet according to an acquisition condition of the network resource.

The terminal may determine the connection status between the WiFi network and the public Internet according to the acquisition condition of the network resource after making the request to acquire the network resource to the network server corresponding to the specified domain name.

Two execution manners may be adopted for the step.

As shown in Fig. 3-2, the first execution manner may include the following three substeps.

In Step 3051, the terminal detects whether the network resource fed back, or sent, by the network server corresponding to the specified domain name is received or not, executes Step 3052 if the network resource is received, and executes Step 3053 if the network resource is not received.

The terminal may detect whether the network resource fed back, or sent, by the network server corresponding to the specified domain name is received or not, and the network resource may be sent to the target WiFi AP by the network server and then forwarded to the terminal by the target WiFi AP. It is noted that the terminal may set a receiving time limit. The receiving time limit may be a period of time when the terminal starts accessing the specified domain name, and if the terminal does not receive the network resource fed back by the network server within the receiving time limit, it is determined that the network resource is not received.

In Step 3052, the terminal determines that the connection status between the WiFi network and the public Internet is a connected status.

When the terminal receives the network resource, it is indicated that the connection between the target WiFi AP and the public Internet is established, the terminal may normally access the public Internet through the WiFi network provided by the target WiFi AP, and at this time, the terminal may determine that the connection status between the WiFi network and the public Internet is the connected status.

It is noted that the connection status indicating the connected status indicates a connection status between the target WiFi AP and the public Internet.

In Step 3053, the terminal determines that the connection status between the WiFi network and the public Internet is a disconnected status.

When the terminal does not receive the network resource, it is indicated that the connection between the target WiFi AP and the public Internet is not established, the terminal may not normally access the public Internet through the WiFi network provided by the target WiFi AP, and at this time, the terminal may determine that the connection status between the WiFi network and the public Internet is the disconnected status.

It is noted that the connection status indicating the disconnected status indicates the connection status between the target WiFi AP and the public Internet.

As shown in Fig. 3-3, the second execution manner may include the following three substeps.

In Step 3054, the terminal detects whether the network resource fed back by the network server corresponding to the specified domain name or not, executes Step 3055 if the network resource is received, and executes Step 3057 if the network resource is not received.

The terminal may detect whether the network resource fed back by the network server corresponding to the specified domain name is received or not, and the network resource may be sent to the target WiFi AP by the network server and then forwarded to the terminal by the target WiFi AP.

In Step 3055, the terminal acquires a data transmission rate at the time of receiving the network resource, and executes Step 3056.

When the terminal receives the network resource, it is indicated that the connection between the target WiFi AP and the public Internet is established, and the terminal may acquire the data transmission rate at the time of receiving the network resource.

In Step 3056, the terminal determines the connection status according to the data transmission rate.

The terminal may determine the connection status according to the data transmission rate after acquiring the data transmission rate at the time of receiving the network resource, and the connection status may be configured to indicate the connected status.

In Step 3057, the terminal determines that the connection status between the WiFi network and the public Internet is the disconnected status.

When the terminal does not receive the network resource, it is indicated that the connection between the target WiFi AP and the public Internet is not established, the terminal may not normally access the public Internet through the WiFi network provided by the target WiFi AP, and at this time, the terminal may determine that the connection status between the WiFi network and the public Internet is the disconnected status.

It is noted that the terminal may stop accessing the WiFi network provided by the target WiFi AP after determining the connection status.

In Step 306: the terminal displays the connection status to present the connection status to the user.

The terminal may display the connection status to present the connection status to the user after determining the connection status. Optionally, the terminal may display the connection status on a graphical user interface, or play the connection status via a sound component or display the connection status on the graphical user interface and play the connection status via the sound component.

It is noted that the WiFi AP is usually connected with a public network access end. The public network access end, however, may not be connected to the public Internet because of various reasons (such as line damage). In the related technology, the terminal only displays SSIDs 31 broadcast by the WiFi APs and corresponding signal strength 32 to the user on the graphical user interface, as shown in Fig. 3-4, and the user may not know the WiFi AP capable of providing the WiFi network through which the public Internet may be accessed. According to the connection status prompting method provided by the embodiment of the present disclosure, the terminal may sequentially acquire connection statuses of multiple WiFi APs found in Step 302 via Step 303 to Step 305 and display the multiple connection statuses to the user. Exemplarily, the terminal may, as shown in Fig. 3-5, display SSIDs 31 of the WiFi APs and corresponding signal strength 32 and connection statuses 33 to the user. Symbol "!" in Fig. 3-5 represents the connection status indicative of the disconnected status, and blank without symbol "!" represents the connection status indicative of the connected status. The terminal may also use other symbols (for example, "X" represents the connection status indicative of the disconnected status and "√" represents the connection status indicative of the connected status) to represent the connection status indicative of the disconnected status and the connection status indicative of the connected status, and there are no limits made in the embodiment of the present disclosure.

In addition, other presentation manners may also be adopted for the connection status indicative of the disconnected status and the connection status indicative of the connected status. The terminal may, as shown in Fig. 3-6, also prompt the data transmission rate 33a to the user as the connection status indicative of the connected status when acquiring the data transmission rate at the time of receiving the network resource, and there are no limits made in the embodiment of the present disclosure.

It is additionally noted that according to the connection status prompting method provided by the embodiment of the present disclosure, the data transmission rate at the time of receiving the network resource is acquired, and the connection status is determined according to the data transmission rate, so that the effect of enriching the connection status is achieved, and user experiences are enhanced.

It is additionally noted that according to the connection status prompting method provided by the embodiment of the present disclosure, the connection statuses of the found WiFi APs are acquired when the terminal does not access the WiFi networks provided by the WiFi APs, so that the effect of learning about each connection status about each of the WiFi APs in advance when the user selects the WiFi networks provided by the WiFi APs for access is achieved.

From the above, according to the connection status prompting method provided by the embodiment of the present disclosure, the connection status, determined according to the acquisition condition of the network resource, between the WiFi network and the public Internet is presented to the user, so that the problems of undiversified prompted information and poorer prompting effect when the terminal employs WiFi signal strength as the connection status in the related technology are solved; and the effect that the terminal may determine whether the WiFi network is normally connected with the public Internet or not according to the connection status is achieved, and a better prompting effect is achieved.

Fig. 4-1 is a flow chart showing another connection status prompting method, according to an exemplary embodiment, and description is given by taking an application of the connection status prompting method to the terminal 11 in the implementation environment shown in Fig. 1 as an example in the embodiment. The connection status prompting method may include the following steps.

In Step 401, the terminal periodically accesses a specified domain name through a currently connected WiFi network provided by the WiFi AP, and makes a request to acquire a network resource to a network server corresponding to the specified domain name.

When the terminal accesses the WiFi network provided by the WiFi AP, the terminal may periodically access the specified domain name through the currently accessed WiFi network, and make the request to acquire the network resource to the network server corresponding to the specified domain name. The specified domain name may be a public network domain name, so that the network server may receive the request when there is a connection established between the WiFi AP and the public Internet.

It is noted that the periodic access of the terminal to the specified domain name may ensure timeliness of an acquired connection status. Such a period may be preset. Exemplarily, the period may be set to be 10 minutes.

In Step 402, the terminal determines the connection status between the WiFi network and the public Internet according to an acquisition condition of the network resource, the connection status including: a connected status and a disconnected status.

The terminal may determine the connection status between the WiFi network and the public Internet according to the acquisition condition of the network resource after making the request to acquire the network resource to the network server corresponding to the specified domain name. The step may refer to Step 305 in the embodiment shown in Fig. 3-1, and will not be repeated here.

In Step 403, the terminal displays the connection status to present the connection status to a user.

The terminal may display the connection status to present the connection status to the user after determining the connection status. Optionally, the terminal may display the connection status on a graphical user interface, or play the connection status via a sound component or display the connection status on the graphical user interface and play the connection status via the sound component. As shown in Fig. 4-2, the terminal may display the connection status 42 beside a WiFi signal strength ID 41 for the user to conveniently and directly acquire related information of the currently accessed WiFi network. The terminal may also represent the connection status by using other marks, and there are no limits made in the embodiment of the present disclosure.

It is additionally noted that according to the connection status prompting method provided by the embodiment of the present disclosure, the connection status between the currently connected WiFi AP and the public Internet is acquired, so that the effect of enabling the user to directly determine whether the currently accessed WiFi network may be connected to the public Internet or not is achieved.

From the above, according to the connection status prompting method provided by the embodiment of the present disclosure, the connection status, determined according to the acquisition condition of the network resource, between the WiFi network and the public Internet is presented to the user, so that the problems of undiversified prompted information and poorer prompting effect when the terminal employs WiFi signal strength as the connection status in the related technology are solved; and the effect that the terminal may determine whether the WiFi network is normally connected with the public Internet or not according to the connection status is achieved, and a better prompting effect is achieved.

Fig. 5 is a flow chart showing another connection status prompting method, according to an exemplary embodiment, and description is given by taking an application of the connection status prompting method to the WiFi AP 12 in the implementation environment shown in Fig. 1 as an example in the embodiment. The connection status prompting method may include the following steps.

In Step 501, a specified domain name is periodically accessed, and a request to acquire a network resource to the network server corresponding to the specified domain name is made.

In Step 502, a connection status between a WiFi network and the public Internet according to an acquisition condition of the network resource is determined, the connection status including: a connected status and a disconnected status.

In Step 503, the connection status is provided for the terminal, the terminal being configured to present the connection status to a user.

From the above, according to the connection status prompting method provided by the embodiment of the present disclosure, the connection status, determined according to the acquisition condition of the network resource, between the WiFi network and the public Internet is presented to the user, so that the problems of undiversified prompted information and poorer prompting effect when the terminal employs WiFi signal strength as the connection status in the related technology are solved; and the effect that the terminal may determine whether the WiFi network is normally connected with the public Internet or not according to the connection status is achieved, and a better prompting effect is achieved.

Fig. 6 is a flow chart showing another connection status prompting method, according to an exemplary embodiment, and description is given by taking an application of the connection status prompting method to the implementation environment shown in Fig. 1 as an example in the embodiment. The connection status prompting method may include the following steps.

In Step 601, the WiFi AP periodically accesses a specified domain name, and makes a request to acquire a network resource to the network server corresponding to the specified domain name.

When the connection status prompting method provided by the embodiment of the present disclosure is adopted, the WiFi AP may periodically access the specified domain name through a connection with a public network access end and make the request to acquire the network resource to the network server corresponding to the specified domain name. Herein, the public network access end is a port configured for connection with the public Internet, and the public network access end may not be connected to the public Internet because of various reasons (such as line damage).

In Step 602, the WiFi AP determines a connection status between a WiFi network and the public Internet according to an acquisition condition of the network resource, the connection status including: a connected status and a disconnected status.

The WiFi AP may determine the connection status between the WiFi network and the public Internet according to the acquisition condition of the network resource after making the request to acquire the network resource to the network server corresponding to the specified domain name, the connection status including: the connected status and the disconnected status. Herein, the WiFi network is provided by the WiFi AP, and the connection status between the WiFi network and the public Internet is a connection status between the WiFi AP and the public Internet.

The WiFi AP may determine that the connection status between the WiFi network and the public Internet is the connected status when the network resource provided by the network server is acquired, and may determine that the connection status between the WiFi network and the public Internet is the disconnected status when the network resource provided by the network server is not acquired.

It is noted that the WiFi AP may measure a data transmission rate at the time of acquiring the network resource when the network resource provided by the network server is acquired, and write the data transmission rate into the connection status.

In Step 603, the WiFi AP broadcasts the connection status.

The WiFi AP may broadcast the connection status after determining the connection status.

It is noted that the WiFi AP may write the connection status into device information and namely broadcast the connection status together with an SSID and a MAC address.

In Step 604, the terminal acquires the connection status broadcast by the WiFi AP, the WiFi AP being found by the terminal according to a WiFi network acquisition instruction.

After the WiFi AP broadcasts the connection status, the terminal may acquire the connection status broadcast by the WiFi AP. When the WiFi AP writes the connection status into the device information for broadcasting, the terminal nearby the WiFi AP (within a signal broadcasting range of the WiFi AP) may analyze the acquired device information to obtain the SSID, MAC address and connection status about the WiFi AP when finding the WiFi AP.

Step 605: the terminal displays the connection status to present the connection status to a user.

The terminal may display the connection status to present the connection status to the user after acquiring the connection status. Optionally, the terminal may display the connection status on a graphical user interface, or play the connection status via a sound component or display the connection status on the graphical user interface and play the connection status via the sound component. The step may refer to Step 306 in the embodiment shown in Fig. 3-1, and will not be repeated here.

It is additionally noted that according to the connection status prompting method provided by the embodiment of the present disclosure, the WiFi AP broadcasts the connection status, so that the effect that the terminal may receive the connection status about the WiFi AP and is not required to acquire the connection status is achieved, and acquisition of the connection status is accelerated.

From the above, according to the connection status prompting method provided by the embodiment of the present disclosure, the connection status, determined according to the acquisition condition of the network resource, between the WiFi network and the public Internet is presented to the user, so that the problems of undiversified prompted information and poorer prompting effect when the terminal employs WiFi signal strength as the connection status in the related technology are solved; and the effect that the terminal may determine whether the WiFi network is normally connected with the public Internet or not according to the connection status is achieved, and a better prompting effect is achieved.

Fig. 7 is a flow chart of another connection status prompting method, according to an exemplary embodiment, and description is given by taking an application of the connection status prompting method to the implementation environment shown in Fig. 1 as an example in the embodiment. The connection status prompting method may include the following steps.

In Step 701, the WiFi AP periodically accesses a specified domain name, and makes a request to acquire a network resource to the network server corresponding to the specified domain name.

When the connection status prompting method provided by the embodiment of the present disclosure is adopted, the WiFi AP may periodically access the specified domain name through a connection with a public network access end and make the request to acquire the network resource to the network server corresponding to the specified domain name. Herein, the public network access end is a port configured for connection with the public Internet, and the public network access end may not be connected to the public Internet because of various reasons (such as line damage).

In Step 702, the WiFi AP determines a connection status between a WiFi network and the public Internet according to an acquisition condition of the network resource, the connection status including: a connected status and a disconnected status.

The WiFi AP may determine the connection status between the WiFi network and the public Internet according to the acquisition condition of the network resource after making the request to acquire the network resource to the network server corresponding to the specified domain name, the connection status including: the connected status and the disconnected status. Herein, the WiFi network is provided by the WiFi AP, and the connection status between the WiFi network and the public Internet is a connection status between the WiFi AP and the public Internet.

The WiFi AP may determine that the connection status between the WiFi network and the public Internet is the connected status when the network resource provided by the network server is acquired, and may determine that the connection status between the WiFi network and the public Internet is the disconnected status when the network resource provided by the network server is not acquired.

It is noted that the WiFi AP may measure a data transmission rate at the time of acquiring the network resource if the network resource provided by the network server is acquired, and write the data transmission rate into the connection status.

In Step 703, the WiFi AP sends the connection status to the currently connected terminal.

When the WiFi AP is connected with the terminal, the WiFi AP may send the determined connection status to the terminal. The WiFi AP may be connected with one or more terminals, and the WiFi AP may send the connection status to the one or more terminals. Exemplarily, a wireless router establishes WiFi connections with three terminals, and then the wireless router may send the connection status to at least one terminal among the three terminals after determining the connection status.

In Step 704, the terminal displays the connection status to present the connection status to a user.

The terminal may display the connection status to present the connection status to the user after acquiring the connection status. Optionally, the terminal may display the connection status on a graphical user interface, or play the connection status via a sound component or display the connection status on the graphical user interface and play the connection status via the sound component. The step may refer to Step 403 in the embodiment shown in Fig. 4-1, and will not be repeated here.

It is noted that the connection status prompting method shown in Fig. 6 and the connection status prompting method shown in Fig. 7 may also be combined for implementation. Exemplarily, the WiFi AP may broadcast the connection status after determining the connection status and send the connection status to the currently connected terminal, and there are no limits made in the embodiment of the present disclosure.

It is additionally noted that according to the connection status prompting method provided by the embodiment of the present disclosure, the connection status is sent to the currently connected terminal, so that the effect that the currently connected terminal may acquire the connection status in real time is achieved.

From the above, according to the connection status prompting method provided by the embodiment of the present disclosure, the connection status, determined according to the acquisition condition of the network resource, between the WiFi network and the public Internet is presented to the user, so that the problems of undiversified prompted information and poorer prompting effect when the terminal employs WiFi signal strength as the connection status in the related technology are solved; and the effect that the terminal may determine whether the WiFi network is normally connected with the public Internet or not according to the connection status is achieved, and a better prompting effect is achieved.

Devices according to the embodiments of the present disclosure are described below, and may be configured to execute the methods according to the embodiments of the present disclosure. Details undisclosed in the embodiments of the present disclosure with respect to the devices refer to the embodiments of the present disclosure with respect to the methods.

Fig. 8 is a block diagram illustrating a connection status prompting device, according to an exemplary embodiment, and the connection status prompting device may be implemented as a part or the whole of the terminal 11 in the implementation environment shown in Fig. 1 by means of software, hardware or a combination thereof. The connection status prompting device may include the following modules.

A domain name access module 810 is configured to periodically access a specified domain name through an accessed WiFi network, and make a request to acquire a network resource to a network server corresponding to the specified domain name.

A status determination module 820 is configured to determine a connection status between the WiFi network and the public Internet according to an acquisition condition of the network resource, the connection status including: a connected status and a disconnected status.

A status display module 830 is configured to display the connection status to present the connection status to a user.

From the above, according to the connection status prompting device provided by the embodiment of the present disclosure, the connection status, determined according to the acquisition condition of the network resource, between the WiFi network and the public Internet is presented to the user, so that the problems of undiversified prompted information and poorer prompting effect when the terminal employs WiFi signal strength as the connection status in the related technology are solved; and the effect that the terminal may determine whether the WiFi network is normally connected with the public Internet or not according to the connection status is achieved, and a better prompting effect is achieved.

Optionally, the domain name access module 810 is configured to: receive a WiFi network acquisition instruction; search for WiFi APs according to the WiFi network acquisition instruction; access the WiFi network provided by a target WiFi AP, the target WiFi AP being screened from the found WiFi APs; and send the request to acquire the network resource to the network server corresponding to the specified domain name through the WiFi network.

Optionally, the status determination module 820 is configured to: detect whether the network resource fed back by the network server corresponding to the specified domain name is received or not; if the network resource is received, determine that the connection status between the WiFi network and the public Internet is the connected status; and if the network resource is not received, determine that the connection status between the WiFi network and the public Internet is the disconnected status.

Optionally, the connection status includes: a data transmission rate.

The status determination module 820 is configured to: if the network resource is received, acquire the data transmission rate at the time of receiving the network resource; and determine the connection status according to the data transmission rate.

It is additionally noted that according to the connection status prompting device provided by the embodiment of the present disclosure, the data transmission rate at the time of receiving the network resource is acquired, and the connection status is determined according to the data transmission rate, so that the effect of enriching the connection status is achieved, and user experiences are enhanced.

It is additionally noted that according to the connection status prompting device provided by the embodiment of the present disclosure, the connection statuses between the found WiFi APs and the public Internet are acquired when the terminal does not establish network connections with the WiFi APs, so that the effect of learning about the connection statuses between the WiFi APs and the public Internet in advance when the user selects the WiFi APs for connection is achieved.

From the above, according to the connection status prompting device provided by the embodiment of the present disclosure, the connection status, determined according to the acquisition condition of the network resource, between the WiFi network and the public Internet is presented to the user, so that the problems of undiversified prompted information and poorer prompting effect when the terminal employs the WiFi signal strength as the connection status in the related technology are solved; and the effect that the terminal may determine whether the WiFi network is normally connected with the public Internet or not according to the connection status is achieved, and the better prompting effect is achieved.

Fig. 9 is a block diagram illustrating a connection status prompting device, according to an exemplary embodiment, and the connection status prompting device may be implemented as a part or the whole of the WiFi AP 12 in the implementation environment shown in Fig. 1 by means of software, hardware or a combination thereof. The connection status prompting device may include the following modules.

A resource requesting module 910 is configured to periodically access a specified domain name, and make a request to acquire a network resource to a network server corresponding to the specified domain name.

A connection determination module 920 is configured to determine a connection status between a WiFi network and the public Internet according to an acquisition condition of the network resource, the connection status including: a connected status and a disconnected status.

A status provision module 930 is configured to provide the connection status for a terminal, the terminal being configured to present the connection status to a user.

Optionally, the status provision module 930 is configured to broadcast the connection status to enable the terminal accessing the WiFi network to acquire the connection status.

It is additionally noted that according to the connection status prompting device provided by the embodiment of the present disclosure, the WiFi AP broadcasts the connection status, so that the effect that the terminal may receive the connection status about the WiFi AP and is not required to acquire the connection status is achieved.

From the above, according to the connection status prompting device provided by the embodiment of the present disclosure, the connection status, determined according to the acquisition condition of the network resource, between the WiFi network and the public Internet is presented to the user, so that the problems of undiversified prompted information and poorer prompting effect when the terminal employs WiFi signal strength as the connection status in the related technology are solved; and the effect that the terminal may determine whether the WiFi network is normally connected with the public Internet or not according to the connection status is achieved, and a better prompting effect is achieved.

With respect to the devices in the above embodiments, the specific manners for performing operations for individual modules therein have been described in detail in the embodiments regarding the related methods, which will not be elaborated herein.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Fig. 10 is a block diagram illustrating a connection status prompting device 1000, according to an exemplary embodiment. For example, the device 1000 may be a mobile phone, a computer, a digital broadcast terminal, a messaging device, a gaming console, a tablet, a medical device, an exercise equipment, a personal digital assistant, and the like.

Referring to Fig. 10, the device 1000 may include one or more of the following components: a processing component 1002, a memory 1004, a power component 1006, a multimedia component 1008, an audio component 1010, an Input/Output (I/O) interface 1012, a sensor component 1014, and a communication component 1016.

The processing component 1002 typically controls overall operations of the device 1000, such as the operations associated with display, telephone calls, data communications, camera, and recording . The processing component 1002 may include one or more processors 1020 to execute instructions to perform all or part of the steps in the abovementioned methods. Moreover, the processing component 1002 may include one or more modules which facilitate interaction between the processing component 1002 and the other components. For instance, the processing component 1002 may include a multimedia module to facilitate interaction between the multimedia component 1008 and the processing component 1002.

The memory 1004 is configured to store various types of data to support the operation of the device 1000. Examples of such data include instructions for any applications or methods operated on the device 1000, contact data, phonebook data, messages, pictures, videos, etc. The memory 1004 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1006 provides power for various components of the device 1000. The power component 1006 may include a power management system, one or more power supplies, and other components associated with the generation, management and distribution of power for the device 1000.

The multimedia component 1008 includes a screen providing an output interface between the device 1000 and the user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 1008 includes a front camera and/or a rear camera. The front camera and/or the rear camera may receive external multimedia data when the device 1000 is in an operation mode, such as a photographing mode or a video mode. Each of the front camera and the rear camera may be a fixed optical lens system or have focusing and optical zooming capabilities.

The audio component 1010 is configured to output and/or input an audio signal. For example, the audio component 1010 includes a microphone (MIC), and the MIC is configured to receive an external audio signal when the device 1000 is in the operation mode, such as a call mode, a recording mode and a voice recognition mode. The received audio signal may be further stored in the memory 1004 or sent through the communication component 1016. In some embodiments, the audio component 1010 further includes a speaker configured to output the audio signal.

The I/O interface 1012 provides an interface between the processing component 1002 and a peripheral interface module, and the peripheral interface module may be a keyboard, a click wheel, a button and the like. The button may include, but not limited to: a home button, a volume button, a starting button and a locking button.

The sensor component 1014 includes one or more sensors configured to provide status assessment in various aspects for the device 1000. For instance, the sensor component 1014 may detect an on/off status of the device 1000 and relative positioning of components, such as a display and small keyboard of the device 1000, and the sensor component 1014 may further detect a change in a position of the device 1000 or a component of the device 1000, presence or absence of contact between the user and the device 1000, orientation or acceleration/deceleration of the device 1000 and a change in temperature of the device 1000. The sensor component 1014 may include a proximity sensor configured to detect presence of an object nearby without any physical contact. The sensor component 1014 may also include a light sensor, such as a Complementary Metal Oxide Semiconductor (CMOS) or Charge Coupled Device (CCD) image sensor, configured for use in an imaging application. In some embodiments, the sensor component 1014 may also include an acceleration sensor, a gyroscope sensor, a magnetic sensor, a pressure sensor or a temperature sensor.

The communication component 1016 is configured to facilitate wired or wireless communication between the device 1000 and another device. The device 1000 may access a communication-standard-based wireless network, such as a WiFi network, a 2nd-Generation (2G) or 3rd-Generation (3G) network or a combination thereof. In an exemplary embodiment, the communication component 1016 receives a broadcast signal or broadcast associated information from an external broadcast management system through a broadcast channel. In an exemplary embodiment, the communication component 1016 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In the exemplary embodiment, the device 1000 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned methods.

In the exemplary embodiment, there is also provided a non-transitory computer-readable storage medium including instructions, such as the memory 1004 including instructions and the instructions may be executed by the processor 1020 of the device 1000 to implement the above-described methods. For example, the non-transitory computer-readable storage medium may be a ROM, a Compact Disc Read-Only Memory (CD-ROM), a magnetic tape, a floppy disc, an optical data storage device and the like.

According to the non-transitory computer-readable storage medium, when the instruction in the storage medium is executed by the processor of the device 1000, the device 1000 may execute the connection status prompting method provided by each of the abovementioed embodiments.

Fig. 11 is a block diagram of a connection status prompting device 1100, according to an exemplary embodiment. For example, the device 1100 may be provided as a WiFi AP. Referring to Fig. 11, the device 1100 includes a processing component 1122, and the processing component 1122 further includes one or more processors and a memory resource represented by a memory 1132 configured to store instructions executed by the processing component 1122, for example, an application program. The application program stored in the memory 1132 may include one or more modules of which each corresponds to a set of instructions. In addition, the processing component 1122 is configured to execute the instructions to execute the abovementioned connection status prompting methods.

The device 1100 may further include a power component 1126 configured to execute power management over the device 1100, a wired or wireless network interface 1150 configured to connect the device 1100 to a network and an I/O interface 1158. The device 1100 may be operated on the basis of an operating system stored in the memory 1132, such as Windows ServerTM, Mac OS XTM, UnixTM, LinuxTM, FreeBSDTM or the like.

Other implementation solutions of the present disclosure will be apparent to those skilled in the art from consideration of the specification and practice of the present disclosure. The application is intended to cover any variations, uses or adaptations of the invention following the general principles thereof and including such departures from the present disclosure as come within known or customary practice in the art.

### Industrial Application

According to the embodiments of the present disclosure, the connection status, determined according to the acquisition condition of the network resource, between the WiFi network and the public Internet is presented to the user, so that the problems of undiversified prompted information and poorer prompting effect when the terminal employs WiFi signal strength as the connection status in the related technology are solved; and the effect that the terminal may determine whether the WiFi network is normally connected with the public Internet or not according to the connection status is achieved, and a better prompting effect is achieved.

## Claims

1. A connection status prompting method, performed in a WiFi Access Point, AP, the method comprises:
periodically accessing (501) a specified domain name, and making a request to acquire a network resource to a network server corresponding to the specified domain name;
determining (502) a connection status between a WiFi network and the public Internet according to an acquisition condition of the network resource, the connection status comprising a connected status and a disconnected status; and
providing (503) the connection status for a terminal, the terminal being configured to present the connection status to a user;
**characterized in that** the step of providing (503) the connection status for the terminal comprises:
broadcasting (603) the connection status to enable the terminal accessing the WiFi network to acquire the connection status.

2. The method according to claim 1, wherein the step of determining the connection status between the WiFi network and the public Internet according to the acquisition condition of the network resource comprises:
detecting whether the network resource fed back by the network server corresponding to the specified domain name is received or not;
in the case that the network resource is received, determining that the connection status between the WiFi network and the public Internet is the connected status; and
in the case that the network resource is not received, determining that the connection status between the WiFi network and the public Internet is the disconnected status.

3. The method according to claim 2, wherein the step of determining the connection status between the WiFi network and the public Internet according to the acquisition condition of the network resource comprises:
in the case that the network resource is received, acquiring a data transmission rate at the time of receiving the network resource; and
determining the connection status according to the data transmission rate.

4. A WiFi Access Point, AP, or a connection status prompting device for use in a WiFi AP, the AP or the device comprising:
a resource requesting module (910), configured to periodically access a specified domain name, and make a request to acquire a network resource to a network server corresponding to the specified domain name;
a connection determination module (920), configured to determine a connection status between a WiFi network and the public Internet according to an acquisition condition of the network resource, the connection status comprising a connected status and a disconnected status; and
a status provision module (930), configured to provide the connection status for a terminal, the terminal being configured to present the connection status to a user;
**characterized in that** the status provision module (930) is configured to broadcast the connection status to enable the terminal accessing the WiFi network to acquire the connection status.

5. The device according to claim 4, wherein the connection determination module (920) is configured to:
detect whether the network resource fed back by the network server corresponding to the specified domain name is received or not;
in the case that the network resource is received, determine that the connection status between the WiFi network and the public Internet is the connected status; and
in the case that the network resource is not received, determine that the connection status between the WiFi network and the public Internet is the disconnected status.

6. The device according to claim 5, wherein the connection determination module (920) is configured to:
in the case that the network resource is received, acquire a data transmission rate at the time of receiving the network resource; and
determine the connection status according to the data transmission rate.

7. A computer program including instructions for executing the steps of a connection status prompting method according to any one of claims 1 to 3 when said program is executed by a computer.

8. A recording medium readable by a computer and having recorded thereon a computer program including instructions for executing the steps of a connection status prompting method according to any one of claims 1 to 3 when said program is executed by a computer.

## Patentansprüche

1. Verbindungszustandsanzeigeverfahren, ausgeführt an einem WiFi-Zugangspunkt AP, wobei das Verfahren Folgendes beinhaltet:
periodisches Zugreifen (501) auf einen bestimmten Domänennamen und Vorlegen, einem Netzwerkserver, einer Anforderung zum Erfassen einer Netzwerkressource entsprechend dem vorgegebenen Domänennamen;
Bestimmen (502) eines Verbindungszustands zwischen einem WiFi-Netzwerk und dem öffentlichen Internet gemäß einer Erfassungsbedingung der Netzwerkressource, wobei der Verbindungszustand einen verbundenen Zustand und einen getrennten Zustand umfasst; und
Bereitstellen (503) des Verbindungszustands für ein Endgerät, wobei das Endgerät zum Präsentieren, einem Benutzer, des Verbindungszustands konfiguriert ist;
**dadurch gekennzeichnet, dass** der Schritt des Bereitstellens (503) des Verbindungszustands für das Endgerät Folgendes beinhaltet:
Rundsenden (603) des Verbindungszustands, um das Endgerät zu befähigen, auf das WiFi-Netzwerk zuzugreifen, um den Verbindungszustand zu erfassen.

2. Verfahren nach Anspruch 1, wobei der Schritt des Bestimmens des Verbindungszustands zwischen dem WiFi-Netzwerk und dem öffentlichen Internet gemäß der Erfassungsbedingung der Netzwerkressource Folgendes beinhaltet:
Erkennen, ob die vom Netzwerkserver entsprechend dem vorgegebenen Domänennamen zurückgemeldete Netzwerkressource empfangen wird oder nicht;
Feststellen, falls die Netzwerkressource empfangen wird, dass der Verbindungszustand zwischen dem WiFi-Netzwerk und dem öffentlichen Internet der verbundene Zustand ist; und
Feststellen, falls die Netzwerkressource nicht empfangen wird, dass der Verbindungszustand zwischen dem WiFi-Netzwerk und dem öffentlichen Netzwerk der getrennte Zustand ist.

3. Verfahren nach Anspruch 2, wobei der Schritt des Feststellens des Verbindungszustands zwischen dem WiFi-Netzwerk und dem öffentlichen Internet gemäß der Erfassungsbedingung der Netzwerkressource Folgendes beinhaltet:
Erfassen, falls die Netzwerkressource empfangen wird, einer Datenübertragungsrate zum Zeitpunkt des Empfangens der Netzwerkressource; und
Feststellen des Verbindungszustands anhand der Datenübertragungsrate.

4. WiFi-Zugangspunkt AP oder Verbindungszustandsanzeigegerät zur Verwendung in einem WiFi-AP, wobei der AP oder das Gerät Folgendes umfasst:
ein Ressourcenerfassungsmodul (910), konfiguriert zum periodischen Zugreifen auf einen vorgegebenen Domänennamen und zum Vorlegen einer Anforderung zum Erfassen einer Netzwerkressource einem Netzwerkserver entsprechend dem vorgegebenen Domänennamen;
ein Verbindungsfeststellungsmodul (920), konfiguriert zum Feststellen eines Verbindungszustands zwischen einem WiFi-Netzwerk und dem öffentlichen Internet gemäß einer Erfassungsbedingung der Netzwerkressource, wobei der Verbindungszustand einen verbundenen Zustand und einen getrennten Zustand umfasst; und
ein Zustandsbereitstellungsmodul (930), konfiguriert zum Bereitstellen des Verbindungszustands für ein Endgerät, wobei das Endgerät zum Präsentieren, einem Benutzer, des Verbindungszustands konfiguriert ist;
**dadurch gekennzeichnet, dass** das Zustandsbereitstellungsmodul (930) zum Rundsenden des Verbindungszustands konfiguriert ist, um das Endgerät zu befähigen, auf das WiFi-Netzwerk zuzugreifen, um den Verbindungszustand zu erfassen.

5. Gerät nach Anspruch 4, wobei das Verbindungsfeststellungsmodul (920) konfiguriert ist zum:
Erkennen, ob die vom Netzwerkserver entsprechend dem vorgegebenen Domänennamen zurückgemeldete Netzwerkressource empfangen wird oder nicht;
Feststellen, falls die Netzwerkressource empfangen wird, dass der Verbindungszustand zwischen dem WiFi-Netzwerk und dem öffentlichen Internet der verbundene Zustand ist; und
Feststellen, falls die Netzwerkressource nicht empfangen wird, dass der Verbindungszustand zwischen dem WiFi-Netzwerk und dem öffentlichen Internet der getrennte Zustand ist.

6. Gerät nach Anspruch 5, wobei das Verbindungsfeststellungsmodul (920) konfiguriert ist zum:
Erfassen, falls die Netzwerkressource empfangen wird, einer Datenübertragungsrate zum Zeitpunkt des Empfangens der Netzwerkressource; und
Feststellen des Verbindungsstatus gemäß der Datenübertragungsrate.

7. Computerprogramm, mit Befehlen zum Ausführen der Schritte eines Verbindungszustandsanzeigeverfahrens nach einem der Ansprüche 1 bis 3, wenn das genannte Programm von einem Computer abgearbeitet wird.

8. Aufzeichnungsmedium, das von einem Computer gelesen werden kann und auf dem ein Computerprogramm mit Befehlen zum Ausführen der Schritte eines Verbindungsstatusanzeigeverfahrens nach einem der Ansprüche 1 bis 3 gespeichert ist, wenn das genannte Programm von einem Computer abgearbeitet wird.

## Revendications

1. Procédé d'annonce d'état de connexion, exécuté dans un point d'accès, AP, wifi, le procédé comprenant :
l'accès périodique (501) à un nom de domaine spécifié, et l'émission d'une demande d'acquisition d'une ressource de réseau auprès d'un serveur de réseau correspondant au nom de domaine spécifié ;
la détermination (502) d'un état de connexion entre un réseau wifi et l'Internet public en fonction d'une condition d'acquisition de la ressource de réseau, l'état de connexion comprenant un état connecté et un état déconnecté ; et
la fourniture (503) de l'état de connexion à un terminal, le terminal étant configuré pour présenter l'état de connexion à un utilisateur ;
**caractérisé en ce que** l'étape de fourniture (503) de l'état de connexion au terminal comprend
la diffusion (603) de l'état de connexion pour permettre au terminal d'accéder au réseau wifi afin d'acquérir l'état de connexion.

2. Procédé selon la revendication 1, dans lequel l'étape de détermination de l'état de connexion entre le réseau wifi et l'Internet public en fonction de la condition d'acquisition de la ressource de réseau comprend :
la détection que la ressource de réseau renvoyée par le serveur de réseau correspondant au nom de domaine spécifié est reçue ou non ;
si la ressource de réseau est reçue, la détermination que l'état de connexion entre le réseau wifi et l'Internet public est l'état connecté ; et
si la ressource de réseau n'est pas reçue, la détermination que l'état de connexion entre le réseau wifi et l'Internet public est l'état déconnecté.

3. Procédé selon la revendication 2, dans lequel l'étape de détermination de l'état de connexion entre le réseau wifi et l'Internet public en fonction de la condition d'acquisition de la ressource de réseau comprend :
si la ressource de réseau est reçue, l'acquisition d'un débit de transmission de données au moment de la réception de la ressource de réseau ; et
la détermination de l'état de connexion en fonction du débit de transmission de données.

4. Point d'accès, AP, wifi, ou dispositif d'annonce d'état de connexion destiné à être utilisé dans un AP wifi, l'AP ou le dispositif comprenant :
un module de demande de ressource (910), configuré pour accéder périodiquement à un nom de domaine spécifié, et émettre une demande d'acquisition d'une ressource de réseau auprès d'un serveur de réseau correspondant au nom de domaine spécifié ;
un module de détermination de connexion (920), configuré pour déterminer un état de connexion entre un réseau wifi et l'Internet public en fonction d'une condition d'acquisition de la ressource de réseau, l'état de connexion comprenant un état connecté et un état déconnecté ; et
un module de fourniture d'état (930), configuré pour fournir l'état de connexion à un terminal, le terminal étant configuré pour présenter l'état de connexion à un utilisateur ;
**caractérisé en ce que** le module de fourniture d'état (930) est configuré pour diffuser l'état de connexion pour permettre au terminal d'accéder au réseau wifi afin d'acquérir l'état de connexion.

5. Dispositif selon la revendication 4, dans lequel le module de détermination de connexion (920) est configuré pour :
détecter que la ressource de réseau renvoyée par le serveur de réseau correspondant au nom de domaine spécifié est reçue ou non ;
si la ressource de réseau est reçue, déterminer que l'état de connexion entre le réseau wifi et l'Internet public est l'état connecté ; et
si la ressource de réseau n'est pas reçue, déterminer que l'état de connexion entre le réseau wifi et l'Internet public est l'état déconnecté.

6. Dispositif selon la revendication 5, dans lequel le module de détermination de connexion (920) est configuré pour :
si la ressource de réseau est reçue, acquérir un débit de transmission de données au moment de la réception de la ressource de réseau ; et
déterminer l'état de connexion en fonction du débit de transmission de données.

7. Programme informatique comportant des instructions pour exécuter les étapes d'un procédé d'annonce d'état de connexion selon l'une quelconque des revendications 1 à 3 quand ledit programme est exécuté par un ordinateur.

8. Support d'enregistrement lisible par un ordinateur et sur lequel est enregistré un programme informatique comportant des instructions pour exécuter les étapes d'un procédé d'annonce d'état de connexion selon l'une quelconque des revendications 1 à 3 quand ledit programme est exécuté par un ordinateur.
